# FASCICULE DE BREVET EUROPEEN

(11) **EP 2 033 336 B1**
(45) Date de publication et mention de la délivrance du brevet: **21.11.2012**
(21) Numéro de dépôt: 07765716.1
(22) Date de dépôt: 28.06.2007
(51) Int. Cl.: H04B 7/08

(54) **PROCEDE ET SYSTEME PERMETTANT LA REORGANISATION SEQUENTIELLE DE SIGNAUX**
VERFAHREN UND SYSTEM ZUR ERMÖGLICHUNG DER SEQUENTIELLEN UMORGANISATION VON SIGNALEN
METHOD AND SYSTEM PERMITTING THE SEQUENTIAL REORGANISATION OF SIGNALS

(30) Priorité: 29.06.2006 FR 0605884
(43) Date de publication de la demande: 11.03.2009
(73) Titulaire: Thales, 92200 Neuilly Sur Seine (FR)
(72) Inventeur: FUCHE, Loïc, F-49360 Maulevrier (FR); BELLION, Anthony, 85140 Les Essarts (FR); LE MEINS, Cyrille, 49000 Angers (FR); FRICONNEAU, Jean-Pierre, 85290 Mortagne Sur Sevre (FR); STEVENS, Patrice, 49360 Maulevrier (FR)
(74) Mandataire: Dudouit, Isabelle
(86) Numéro de dépôt international: PCT/EP2007/056523
(87) Numéro de publication internationale: WO 2008/000806

(56) Documents cités:
- EP-A1- 0 428 448
- EP-A2- 0 594 352
- FR-A1- 2 295 434
- US-A- 4 188 578
- US-A- 4 419 918
- US-A- 4 646 754
- US-A- 5 838 680

## Description

L'invention concerne notamment un système et un procédé pour réorganiser séquentiellement des signaux.

L'invention s'applique dans toute application électronique de précision et de traitement du signal dédiée aux systèmes d'acquisition de signaux (par exemple les récepteurs numériques).

La fonction de « réorganisation séquentielle de signaux » permet, dans un contexte de goniométrie, par exemple, d'acquérir un par un les signaux reçus sur un réseau d'aériens, et de les traiter comme s'ils avaient été acquis simultanément.

Dans le cas de la goniométrie, par exemple, le principe actuel de réception est basé sur l'utilisation de circuits analogiques (appelés hybrides par la suite), placés au niveau des aériens, et permettant les traitements sur des signaux acquis aux même instants sur plusieurs aériens. Ce concept permet au récepteur d'acquérir une combinaison d'aérien mais pas un seul aérien. Ce principe réduit donc la bande d'utilisation et est réservé aux systèmes fonctionnant en bande étroite, inférieur à l'octave.

Les systèmes connus de l'art antérieur utilisent généralement autant de voies de réception que d'aériens lors de l'acquisition des signaux. La faible bande passante des circuits hybride entraîne donc leur multiplication, et donc un coût important, pour pouvoir couvrir toute la bande de fréquence voulue. Un autre inconvénient présenté par de tels systèmes est que ce n'est pas le signal lui-même qui est numérisé mais une fonction correspondant au signal présent sur deux aériens.

Le brevet US 4 419 918 décrit un système ayant plusieurs entrées en parallèle et une sortie séquentielle commandée par une horloge. Le signal de sortie est traité par plusieurs circuits différents.

Le brevet FR 2 295 434 décrit un dispositif transformant des entrées parallèles en une sortie séquentielle commandée par une horloge.

Les systèmes selon l'art antérieur ne permettent pas d'accéder à l'information d'amplitude ce qui est limitatif du point de vue algorithmique en particulier en goniométrie.

Les techniques de l'art antérieur connues du demandeur ne permettent pas de fonctionner sur une large bande de fréquence. Elles ne permettent pas non plus une synchronisation précise des signaux. De plus, elles n'autorisent pas l'acquisition réelle des signaux, mais uniquement l'acquisition de l'image du rapport de phase de signaux pris deux à deux, ce qui limite les traitements numériques en aval.

L'invention concerne un procédé pour réorganiser de manière séquentielle des signaux reçus sur un ensemble de capteurs caractérisé en ce qu'il comporte au moins les étapes suivantes :
o acquérir un signal reçu sur un capteur de l'ensemble, le mémoriser, puis commuter pour acquérir un autre signal reçu sur un autre capteur de l'ensemble,
o réitérer l'acquisition des signaux reçus sur chacun des capteurs de l'ensemble jusqu'à ce que tous les capteurs, ou la majorité, aient été scrutés, et stocker toutes les informations acquises,
o sélectionner un des capteurs sur lequel le signal a été acquis précédemment et réitérer un cycle d'acquisition de signal et de mémorisation pour ce signal de référence,
o comparer cette acquisition avec l'acquisition précédemment obtenue pour le même capteur,
o déterminer à partir de cette comparaison l'erreur de commutation existante,
o appliquer la correction d'erreur sur chacun des signaux enregistrés,
o corriger l'erreur de phase due au temps de commutation.

Selon une variante de mise en oeuvre du procédé, on sélectionne le signal de la première voie de réception comme signal de référence.

Le procédé peut comporter une étape de mise en forme du signal commuté avant son acquisition.

La mise en forme du signal est, par exemple, exécutée par un module de réception radio-fréquence monovoie.

Le procédé comporte, par exemple, une étape de goniométrie.

L'objet de l'invention présente notamment comme avantages de supprimer les composants hybrides des systèmes selon l'art antérieur et d'acquérir séquentiellement les signaux sur chaque aérien tout en contrôlant les erreurs de phase.

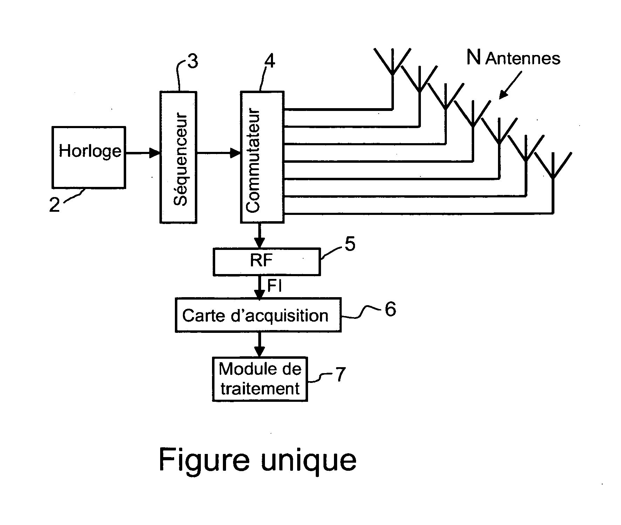

D'autres caractéristiques et avantages de la présente invention apparaîtront mieux à la lecture de la description qui suit annexée de la figure unique qui représente un exemple de structure de système donné à titre illustratif et nullement limitatif.

La figure représente une structure de système comprenant par exemple :
o un réseau d'aériens 1n ou capteurs,
o une horloge haute précision 2, commandant un séquenceur 3 et permettant de cadencer précisément les temps de commutation et d'acquisition entre chaque aériens 1 n,
o le séquenceur 3 commande lui-même un commutateur d'antenne 4, pour la réception des signaux,
o le commutateur d'antenne 4 est relié à un module de réception radiofréquence mono-voie 5,
o une carte d'acquisition 6, et un modèle de traitement 7.

Le commutateur d'antenne 4 est notamment adapté et choisi pour exécuter le passage d'un aérien à un autre. Le commutateur d'antenne 4 est par exemple un commutateur N aériens vers 1 voie de réception.

Le commutateur d'antenne 4 a notamment pour fonction de laisser passer les signaux d'un aérien vers les dispositifs situés dans la chaîne de traitement et de bloquer les signaux issus des autres aériens. Il présente notamment comme particularité d'avoir un temps de réponse à l'ouverture/fermeture identique ou sensiblement identique sur chacune des voies d'aérien.

Le séquenceur 3 génère la fonction de gestion du commutateur. Il a notamment pour fonction de sélectionner la voie qui est connectée sur l'aérien souhaité.

L'horloge 2 sert à cadencer le séquenceur. Le cycle de balayage de tous les aériens est choisi pour que la fréquence de l'horloge soit stable. L'ordre de grandeur est par exemple de 10⁻¹⁰.

Le dispositif RF 5 est un module de réception radio. Ce module a notamment pour fonction de transposer la bande de fréquence de réception à une fréquence intermédiaire qui est renvoyée sur la carte d'acquisition 6.

La carte d'acquisition est adaptée pour notamment quantifier les signaux reçus sur chaque aérien et de les envoyer vers le module de traitement 7.

Dans le cas d'une application de goniométrie, le système met en oeuvre un algorithme de goniométrie approprié au système antennaire.

La structure fonctionne par exemple de la manière décrite ci-après.

L'idée repose notamment sur une acquisition séquentielle des signaux sur chaque aérien, et leur mise en cohérence temporelle tout en contrôlant les erreurs de phase.

On suppose que le signal est stationnaire ou sensiblement stationnaire pendant un cycle d'acquisition du signal. On considère qu'un signal donné est caractérisé de moins l'infini à plus l'infini, si on caractérise seulement ce signal sur une faible durée qui permet d'en déterminer sa phase et son amplitude. Cette caractérisation ou modélisation faite, on peut ensuite estimer la valeur du signal soit dans le passé, soit dans le futur.
1. Chaque aérien est connecté à un commutateur d'antenne N vers 1 qui est contrôlé par le séquenceur cadencé à une vitesse d'horloge,
2. On acquiert un signal sur un aérien puis on commute sur l'aérien suivant,
3. On répète l'acquisition et on recommence le cycle jusqu'au dernier aérien, les acquisitions et le stockage sur les N antennes du réseau d'aériens sont ainsi réalisées, chaque signal ayant été transposé grâce au récepteur radio à une fréquence radio.
On sélectionne ensuite un signal en référence parmi ceux qui ont été acquis, puis on réalise une N+1 commutation, c'est-à-dire par exemple sur le premier aérien et l'on refait une acquisition. Cette dernière acquisition est comparée à la première acquisition. Cette comparaison permet de déterminer une erreur éventuellement existante et de recaler chacune des acquisitions. Le signal étant considéré comme stationnaire ou sensiblement stationnaire pendant un cycle d'acquisition du signal (acquisition sur une durée très brève), on est en mesure d'estimer sa valeur par rapport à celle acquise et donc d'en déduire la dérive qui n'est autre que les erreurs de commutations.
4. connaissant les différentes erreurs, le système peut :
   o dans un premier temps, corriger l'erreur globale sur chaque signal enregistré, et
   o ensuite, corriger l'erreur de phase due au temps de commutation,
il est alors ensuite possible de synchroniser les signaux enregistrées afin d'appliquer les traitements d'antenne appropriés.

Le système est cadencé au rythme du séquenceur avec la précision de l'horloge. Le séquenceur contrôle le commutateur.

Les étapes décrites précédemment s'appliquent, par exemple, pour des applications de goniométrie.

Le système et le procédé selon l'invention s'appliquent pour toute chaîne de mesure qui met en oeuvre une acquisition de signaux en parallèles.

## Revendications

1. Procédé pour réorganiser de manière séquentielle des signaux reçus sur un ensemble de capteurs **caractérisé en ce qu'**il comporte au moins les étapes suivantes :
o acquérir un signal reçu sur un capteur de l'ensemble, le mémoriser, puis commuter pour acquérir un autre signal reçu sur un autre capteur de l'ensemble,
o réitérer l'acquisition des signaux reçus sur chacun des capteurs de l'ensemble jusqu'à ce que tous les capteurs ou la majorité aient été scrutées, et stocker toutes les informations acquises,
o sélectionner un des capteurs sur lequel le signal a été acquis précédemment et réitérer un cycle d'acquisition de signal et de mémorisation pour ce signal de référence,
o comparer cette acquisition avec l'acquisition précédemment obtenue pour le même capteur,
o déterminer à partir de cette comparaison l'erreur de commutation existante,
o appliquer la correction d'erreur sur chacun des signaux enregistrés,
o corriger l'erreur de phase due au temps de commutation.

2. Procédé selon la revendication 1, **caractérisé en ce que** l'on sélectionne le signal de la première voie de réception comme signal de référence.

3. Procédé selon la revendication 1 **caractérisé en ce qu'**il comprend une étape de mise en forme du signal commuté avant son acquisition.

4. Procédé selon la revendication 3 **caractérisé en ce que** la mise en forme du signal est exécuté par un module de réception radio-fréquence monovoie.

5. Procédé selon l'une des revendications 1 à 3, **caractérisé en ce qu'**il comporte une étape de goniométrie.

## Claims

1. A method for the sequential reorganisation of signals received on a set of sensors, **characterised in that** it comprises at least the following steps:
- acquiting a signal received on a sensor of the set, memorizing said signal, then switching in order to acquire another signal received on another sensor of the set;
- repeating the acquisition of the signals received on each of the sensors of the set until all of the sensors or the majority of the sensors have been polled and storing all of the acquired information;
- selecting one of the sensors on which the signal has been previously acquired and repeating a signal acquisition and recording cycle for this reference signal;
- comparing this acquisition with the acquisition previously obtained for the same sensor;
- determining the existing switching error from this comparison;
- applying the error correction to each of the memorized signals;
- correcting the phase error caused by the switching time.

2. The method according to claim 1, **characterised in that** the signal of the first receiving channel is selected as the reference signal.

3. The method according to claim 1, **characterised in that** it comprises a step of shaping the switched signal before its acquisition.

4. The method according to claim 3, **characterised in that** the shaping of the signal is executed by a mono-channel radio-frequency receiving module.

5. The method according to any one of claims 1 to 3, **characterised in that** it comprises a goniometry step.

## Patentansprüche

1. Verfahren zum sequentiellen Umorganisieren von auf einem Satz von Sensoren empfangenen Signalen, **dadurch gekennzeichnet, dass** es wenigstens die folgenden Schritte beinhaltet:
- Erfassen eines auf einem Sensor des Satzes empfangenen Signals, Speichern des Signals, dann Umschalten zum Erfassen eines anderen auf einem anderen Sensor des Satzes empfangenen Signals,
- Wiederholen der Erfassung der auf jedem der Sensoren des Satzes empfangenen Signale, bis alle oder die meisten Sensoren abgefragt sind, und Speichern aller erfassten Informationen,
- Auswählen eines der Sensoren, auf dem das Signal zuvor erfasst wurde, und Wiederholen eines Signalerfassungs- und -speicherzyklus für dieses Referenzsignal,
- Vergleichen dieser Erfassung mit der zuvor von demselben Sensor erhaltenen Erfassung,
- Ermitteln eines existierenden Umschaltfehlers anhand dieses Vergleichs,
- Anwenden von Fehlerkorrektur auf jedes der aufgezeichneten Signale,
- Korrigieren eines Phasenfehlers aufgrund des Urnschaltzeitpunkts.

2. Verfahren nach Anspruch 1, **dadurch gekennzeichnet, dass** das Signal des ersten Empfangskanals als Referenzsignal gewählt wird.

3. Verfahren nach Anspruch 1, **dadurch gekennzeichnet, dass** es einen Schritt des Formens des geschalteten Signals vor seiner Efassung beinhaltet.

4. Verfahren nach Anspruch 3, **dadurch gekennzeichnet, dass** das Formen des Signals durch ein einkanaliges Funkfrequenzempfangsmodul erfolgt.

5. Verfahren nach einem der Ansprüche 1 bis 3, **dadurch gekennzeichnet, dass** es einen Goniometrieschritt beinhaltet.
